Europäisches Patentamt

European Patent Office

Office européen des brevets

(11) Numéro de publication: **0 230 809 B1**

# FASCICULE DE BREVET EUROPEEN

(45) Date de publication de fascicule du brevet: **11.03.92**

(51) Int. Cl.5: **H04N 5/33**, H04N 5/217

(21) Numéro de dépôt: **86402725.5**

(22) Date de dépôt: **09.12.86**

(54) **Caméra thermique à balayage parallèle.**

(30) Priorité: **10.12.85 FR 8518236**

(43) Date de publication de la demande:
**05.08.87 Bulletin 87/32**

(45) Mention de la délivrance du brevet:
**11.03.92 Bulletin 92/11**

(84) Etats contractants désignés:
**BE DE GB NL SE**

(56) Documents cités:
**FR-A- 2 548 498**
**US-A- 4 178 522**

(73) Titulaire: **SAT Société Anonyme de Télécommunications**
**41, rue Cantagrel**
**F-75631 Paris Cedex 13(FR)**

(72) Inventeur: **Sirieix, Michel Benoît**
**11 parc de Diane**
**F-78350 Jouy en Josas(FR)**
Inventeur: **Pruvot, Henri Guy Gaston**
**86 avenue Emile Zola**
**F-75015 Paris(FR)**
Inventeur: **Virdis, Albin**
**7 rue de Viry**
**F-91600 Savigny sur Orge(FR)**

(74) Mandataire: **Bloch, Gérard et al**
**2, square de l'Avenue du Bois**
**F-75116 Paris(FR)**

Rank Xerox (UK) Business Services

## Description

La présente invention concerne une caméra thermique à balayage parallèle, comprenant une plaquette de détecteurs infrarouge disposés en lignes et une plaquette de traitement des signaux de détection comportant des moyens pour intégrer les courants de sortie des détecteurs et fournir les quantités de charges associées à chacune des lignes de détecteurs.

Une telle caméra est aujourd'hui utilisée notamment dans le domaine de l'imagerie, pour l'analyse de paysages en temps réel, par exemple.

Pour un éclairement, ou un fond, uniforme, les quantités de charges varient quand même d'une ligne de détecteurs à l'autre, ce qui contribue à créer le phénomène de faux contraste, ou bruit spatial fixe, et qui détériore la qualité des images. Ce bruit a en fait pour origine les dispersions des courants débités par les différents détecteurs en raison des variations des

- longueurs d'onde de coupure,
- courants d'obscurité,
- impédances,
- rendements quantiques et surfaces sensibles,
- tensions de polarisation.

Pour éviter une saturation des circuits de traitement par ce phénomène et pour que la qualité des images obtenues ne soit pas trop détériorée, il faut donc déjà une certaine dynamique par rapport au niveau de bruit, à laquelle doit s'ajouter la dynamique propre des signaux de détection qui dépend des écarts de température considérés.

Pour résoudre le problème posé par le bruit spatial fixe, on pourrait donc vouloir d'abord mémoriser les différents niveaux de charges de faux contraste, de préférence en numérique, avant de procéder à la comparaison avec les niveaux de charges des signaux de détection. Compte tenu de la dynamique évoquée ci-dessus, en pratique de l'ordre de 1000, il faudrait donc procéder à une conversion analogique/numérique (A/N) des signaux qui soit compatible en précision, c'est-à-dire sur environ il ou 12 bits, et avec une grande rapidité, c'est-à-dire sur une période de l'ordre de 500 à 600 ns si 18 lignes de détecteurs sont balayées en 10 $\mu$s.

Il existe actuellement sur le marché des convertisseurs A/N 8 bits - 500 ns, mais pas de convertisseur 12 bits.

La présente invention vise donc à pallier ce manque.

On connaît déjà, par le document FR-A-2 548 498, un dispositif de correction du niveau de sortie d'un dispositif à transfert de charges permettant de réduire ou d'annuler la dynamique de bruit spatial fixe. Mais les moyens le permettant sont constitués par une chaîne comportant de nombreux composants dont des convertisseurs à grande dynamique. En outre, ce dispositif de correction ne comporte pas de contrôle de gain. La présente invention, plus particulièrement, vise donc soit à s'affranchir d'un convertisseur analogique-numérique, soit à adopter un convertisseur analogique-numérique adapté à la seule dynamique du signal utile et, par conséquent, peu encombrant et peu consommateur d'énergie.

A cet effet, la présente invention concerne une caméra thermique à balayage parallèle, comprenant une plaquette de détecteurs infrarouge disposés en lignes et une plaquette de traitement des signaux de détection comportant des moyens pour intégrer les courants de sortie des détecteurs et fournir des signaux de charges détectés correspondant à des quantités de charges de détection associées à chacune des lignes de détecteurs, caractérisée par le fait que les deux plaquettes sont superposées sous forme de composant hybride et que la plaquette de traitement comporte des moyens de contrôle de gain agissant sur l'amplitude des signaux de charges de détection détectés et traités et délivrés par la caméra et des moyens de différenciation entre quantités de charges de détection et quantités de charges de référence associées à une scène de référence, comprenant des moyens de conversion de charges de détection en tensions, réunis à un générateur de tension de référence par une liaison capacitive et des moyens coopérant avec des moyens pour montrer aux diodes de détection un fond uniforme de référence à température déterminée pendant chaque retour de balayage, et fournir ainsi pour chaque ligne de détecteurs, le niveau des quantités de charges de référence pour les signaux de charges détectés, les moyens de différenciation étant agencés pour déterminer, pour chaque ligne de détecteurs, la différence entre les quantités de charges de détection et les quantités de charges associées à une scène de référence représentée par ledit fond, pour considérer le niveau des charges de référence de chaque ligne de détecteurs comme niveau de référence et s'affranchir ainsi du bruit spatial fixe dans le signal de sortie de la caméra représenté par cette différence de quantités de charges.

Grâce au contrôle de gain, la dynamique de signal peut être notablement réduite ; pour reprendre l'exemple abordé plus haut, dans les conditions de l'invention, un convertisseur A/M de 8 bits suffirait amplement.

Comme les dispersions de niveaux de charges, avec une réduction de dynamique de signal, auraient pris une importance néfaste considérable, l'invention prévoit donc aussi une réduction, pour ne pas dire une annulation, de la dynamique de bruit spatial fixe. En effet, en ne retenant que la différence entre les niveaux de charges de détection et les niveaux de charges de référence, on ne retient que la partie utile des informations, en s'affranchissant par conséquent de l'erreur de bruit spatial fixe essentiellement liée aux quantités de charges de référence.

De préférence, les moyens de contrôle de gain des signaux détectés et traités sont des moyens de contrôle automatique de gain commandant, en fonction de l'amplitude moyenne des signaux, les moyens d'intégration des courants de sortie des détecteurs.

Avantageusement, les moyens de contrôle commandent le temps d'intégration des moyens d'intégration à l'aide d'une horloge à rapport cyclique variable.

De préférence, les moyens d'intégration comportent un premier intégrateur de stockage et un deuxième intégrateur d'évacuation connectés alternativement à leur détecteur associé par un commutateur.

De préférence encore, les moyens d'intégration des courants de sortie des détecteurs comportent des transistors à effet de champ d'entrée de la plaquette de traitement, connectés directement à leurs détecteurs respectifs et les transistors à effet de champ d'entrée sont intégrés dans un substrat silicium, ils comportent chacun, un puits de stockage comme drain, et sont suivis, chacun, d'un espace agencé pour être comblé en porteurs minoritaires sous l'action d'une plaque de transfert, et d'un second puits de stockage, le drain des transistors d'entrée constituant la source de transistors à effet de champ d'évacuation.

L'invention sera mieux comprise à l'aide de la description suivante de la caméra de l'invention, en référence aux dessins annexés, sur lesquels :

- la figure 1 représente schématiquement la plaquette de détection et la plaquette de traitement de la caméra;
- la figure 2 représente schématiquement l'ensemble des éléments de la caméra;
- la figure 3 représente schématiquement les moyens d'intégration des courants de sortie des détecteurs de la plaquette de détection de la caméra;
- la figure 4 représente schématiquement les moyens de correction d'erreur de la plaquette de traitement de la caméra;
- la figure 5 représente schématiquement un transistor à effet de champ;
- la figure 6 représente le schéma électrique du transistor de la figure 5;
- la figure 7 représente les circuits, intégrés sur le substrat silicium, de la plaquette de traitement, des moyens d'intégration, de contrôle de gain et de mise en phase de la caméra;
- la figure 8 représente le schéma électrique des circuits intégrés de la figure 7, et
- la figure 9 représente les circuits, partiellement intégrés et partiellement sous leur forme électrique schématique, des moyens de sommation, de correction d'erreur et de multiplexage de la caméra de l'invention.

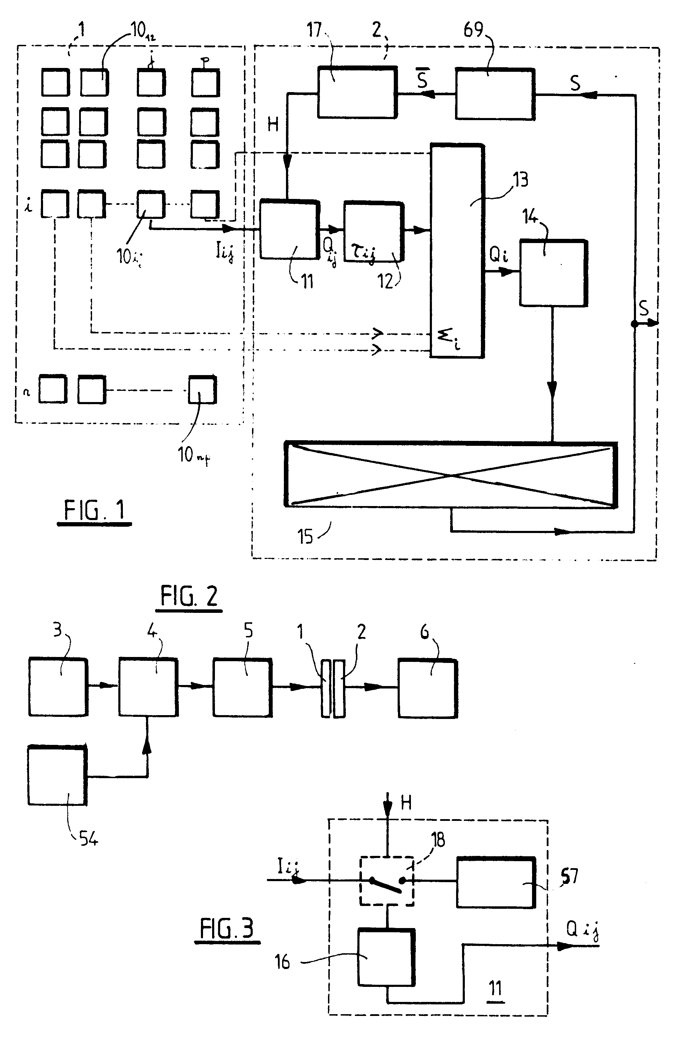

Schématiquement, la plaquette de détection 1 et la plaquette, ou puce, de traitement 2 de la caméra thermique de l'invention, qui en sont les éléments essentiels, sont représentées sur la figure 1. Les plaquettes 1, 2 s'insèrent dans un ensemble d'autres éléments par ailleurs parfaitement connus et dont l'existence ne sera ici que brièvement rappelée, en référence à la figure 2. La caméra comprend, en série, une optique infrarouge 3, un système d'analyse, ou de balayage, 4, une optique de concentration 5, les plaquettes de détection et de traitement 1, 2, et un dispositif de visualisation 6. Le système de balayage 4 comprend essentiellement un miroir monté pivotant pour faire défiler le paysage à analyser devant les détecteurs fixes de la plaquette 1.

La plaquette 1 comporte une mosaïque, ou matrice, de n x p détecteurs infrarouge 10, disposés en n lignes de p détecteurs. Pour des raisons pratiques de fabrication, les n lignes de détecteurs 10 sont disposées différemment de la disposition de la fig. 1, en quinconce suivant 2 p colonnes de $\frac{n}{2}$ éléments. Au plan technologique, qui sera à nouveau abordé plus loin beaucoup plus en détail, les détecteurs sont avantageusement des photodiodes en tellure de mercure cadmium (Hg Cd Te) reliées, chacune, au circuit de la plaquette de traitement 2, qui est un circuit silicium du type à transfert de charges, ou CCD, ou d'un type analogue. Les deux plaquettes 1 et 2 sont superposées, on parle d'un composant hybride, et les diodes 10 sont connectées au circuit de la plaquette 2 par exemple par des poutres (beam-leads) ou d'autres connexions analogues. Pour des raisons de clarté, seules les connexions des diodes de la ligne i ont été représentées sur la figure 1, et plus précisément la connexion de la diode 10ij, représentant la diode de la ligne i et de la colonne j. Les diodes d'une ligne sont balayées successivement les unes après les autres.

Le courant de sortie (Iij) de chaque diode (10ij) de chaque ligne (i) est traité dans un dispositif d'intégration et de contrôle de gain 11, qui délivre un signal de charges (Qij) à une ligne à retard 12, dans laquelle il subit un déphasage déterminé (Tij). Les signaux de charges délivrés par toutes les lignes à retard 12 associées aux diodes d'une même ligne sont additionnés dans un sommateur 13. Les signaux délivrés par tous les sommateurs 13 associés aux différentes lignes de la plaquette de détection 1 sont, chacun, traités dans un dispositif de correction d'erreur 14, avant d'être multiplexés dans un multiplexeur 15, dont le signal de sortie S est envoyé sur le dispositif de visualisation 6. Les lignes à retard 12 assurent la remise en phase des signaux délivrés par les détecteurs d'une même ligne, intégrés et contrôlés, qui est nécessaire en raison de la dispersion géométrique de ces détecteurs.

Lorsque chaque ligne de détecteurs ne comporte que deux détecteurs, une sélection du meilleur des deux détecteurs est effectuée après multiplexage par des moyens appropriés et au demeurant connus.

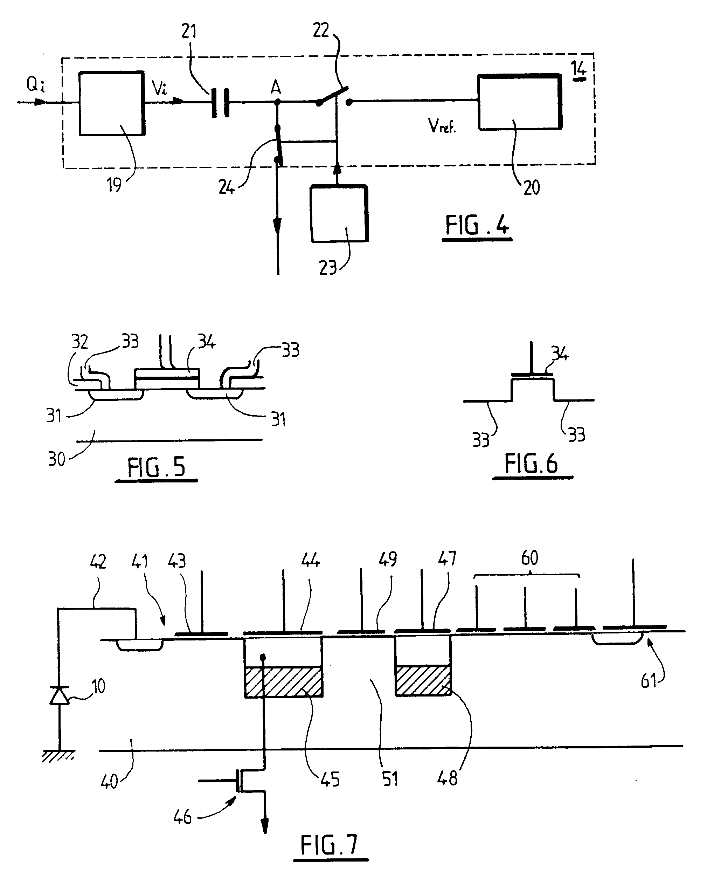

Les courants (Iij) délivrés par les diodes (10ij) sont intégrés et transformés en quantité de charges Qij dans un intégrateur 16, de stockage (figure 3), dont le temps d'intégration t est commandé par une horloge 17 (figure 1) délivrant un train d'impulsions H de largeur t et de période T, le rapport cyclique $\frac{t}{T}$ étant variable. Au-delà du temps t, les courants des diodes sont intégrés, sur l'intervalle (T-t), dans un deuxième intégrateur 57, d'évacuation, dit "poubelle". Le dispositif d'intégration et de contrôle 11 comporte donc deux intégrateurs 16, 57, connectés alternativement à leur diode de détection associée par une commutateur 18 commandé par l'horloge 17. Le rapport cyclique de l'horloge $\frac{t}{T}$, et donc le temps d'intégration t de l'intégrateur de stockage 16, varie avec l'amplitude moyenne $\overline{S}$ du signal S délivré par le multiplexeur 15. Cette amplitude moyenne est mesurée dans un dispositif 69, relié à la commande de variation du rapport cyclique de l'horloge 17.

La boucle des éléments 16, 15, 69, 17, 16 forme une boucle de contrôle automatique de gain permettant de réduire la dynamique de signal. Quand le signal est trop élevé, il est écrasé.

Après retard dans les éléments 12, les quantités de charges (Qij) des diodes d'une ligne (i) de diodes, désignées par quantités de charges de détection, sont additionnées dans le sommateur 13 qui délivre une quantité de charges Qi de l'ensemble de la ligne (i) correspondante, qui est traitée dans le dispositif de correction d'erreur 14. La quantité de charges Qi est transformée en tension Vi dans l'élément 19, par division par une grandeur capacitive C, relié à un générateur 20 de tension de référence $V_{ref}$ par un condensateur de liaison 21 et un interrupteur 22. Le dispositif de correction 14 est connecté au multiplexeur 15 au point A, entre le condensateur 21 et l'interrupteur 22, par un autre interrupteur 24.

Pendant chaque retour de balayage, on montre aux diodes de toutes les lignes un fond uniforme de référence 54 (figure 2), par conséquent à température déterminée. Pendant ces retours de balayage, l'interrupteur 22 est fermé et l'interrupteur 24 est ouvert par un dispositif 23, en l'occurrence un capteur de la position du miroir de balayage, ce qui fixe le potentiel du point A à $V_{ref}$.

Pendant ces retours de balayage, la différence de potentiel aux bornes du condensateur de liaison 21 s'élève, pour la ligne i, à

$$V_{ref} - \frac{Q_{iref}}{C} \quad ,$$

pour la ligne l, à

$$V_{ref} - \frac{Q_{lref}}{C} \quad ,$$

Qiref et Qlref, quantités de charges dites de référence, étant par nature différentes à cause du bruit spatial fixe, alors que le potentiel $V_{ref}$ est le même pour toutes les lignes.

A la suite du balayage d'une ligne de l'image à analyser pendant lequel l'interrupteur 22 est ouvert et l'interrupteur 24 fermé, la différence de potentiel aux bornes du condensateur de liaison 21 devient, pour la ligne i

$$V_{ref} + \frac{Q_i - Q_{iref}}{C} \quad ,$$

pour la ligne l

$$V_{ref} + \frac{Q_l - Q_{lref}}{C}$$

Le condensateur de liaison permet donc de déterminer, pour chaque ligne de détecteurs, la différence entre les quantités de charges de détection et les quantités de charges de référence.

Quel que soit le niveau des charges de référence d'une ligne, on le considère ainsi comme niveau zéro, ou niveau de référence. En d'autres termes, on détermine un niveau, ici de charges de détection, en l'occurrence converti en niveau de potentiel, par rapport à un niveau de référence. Comme c'est essentiellement ce niveau de référence qui est entaché d'erreur, à cause du bruit spatial fixe, on s'affranchit ainsi de cette erreur. En d'autres termes encore, seule la partie utile des informations est multiplexée. Le dispositif de correction d'erreur 14 permet donc, de son côté, de réduire ou d'annuler la dynamique de bruit spatial fixe.

On notera ici que la valeur de $V_{ref}$ est déterminée pour être comprise entre les valeurs maximale et minimale de Vi.

Dans la forme de réalisation préférée, la plaquette de traitement 2 de la caméra de l'invention est réalisée dans la technologie qui va maintenant être décrite.

Rappelons brièvement d'abord ce qu'est un transistor à effet de champ FET (field effect transistor), à structure MOS (metal oxyd semi-conductor), représenté sur la figure 5 et par son schéma électrique sur la figure 6.

Un substrat 30 d'un type de conductivité comporte deux zones 31 de dopage de l'autre type de conductivité diffusées à partir de deux ouvertures pratiquées dans une couche d'oxyde 32. Deux bornes de contact 33 connectées aux deux zones de dopage 31 constituent le drain et la source. Une couche métallique 34, sur la couche d'oxyde 32 entre les deux ouvertures de dopage, constituent la grille, et connectée à une troisième borne de contact, assure la polarisation du transistor. Quand la grille 34 est sous tension, il se crée sous celle-ci une charge d'espace qui comble en porteurs minoritaires l'espace s'étendant entre les deux zones de dopage 31 et qui connecte la source et le drain 33,33.

C'est dans cette technologie qu'est réalisée la plaquette de traitement 2 de la caméra de l'invention, dont les circuits sont intégrés sur un substrat 10 en silicium (fig. 7).

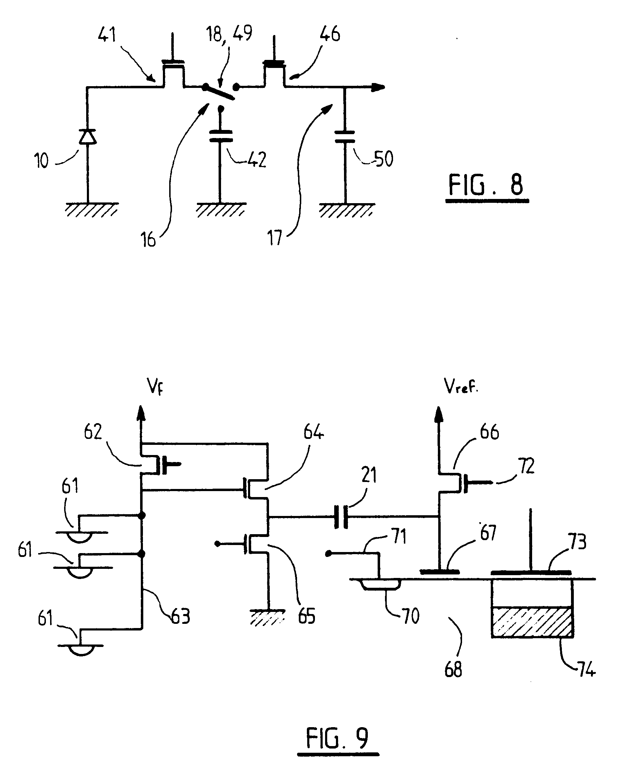

Soit 10 une diode infrarouge de la plaquette de détection 1, qui fonctionne en inverse et dont la cathode constitue la source 42 du transistor FET 41 d'entrée du circuit de traitement à injection directe. La grille de polarisation du transistor 41 est représentée en 43. Une plaque 44, à un potentiel de stockage, crée, dans le substrat 40, un premier puits de stockage 45 constituant le drain du transistor 41. Le drain 45 du transistor 41 constitue la source d'un deuxième transistor FET 46, dit d'évacuation. De l'autre côté de la plaque de stockage 44, par rapport à la grille 43 du transistor 41, est disposé une plaque 47, à un potentiel déterminé, destinée à créer, sous elle, un deuxième puits de stockage 48, constituant le condensateur du premier intégrateur 16 de la figure 3. Une plaque 49, à un potentiel de transfert contrôlé par l'horloge à rapport cyclique variable 17, entre les plaques 44 et 47, au-dessus d'un espace 51 dans le substrat 40 permet, pendant le temps t évoqué ci-dessus, de transférer les charges du premier puits 45 dans le second puits 48, par création d'une charge d'espace réunissant les deux puits 45, 48. Au-delà du temps t, pendant l'intervalle (T-t), et l'action de la plaque 49 étant inhibée, les charges restantes du premier puits 45 s'écoulent à travers le transistor 46 dans un deuxième condensateur 50, non représenté sur la figure 7. Le transistor 46 et ce deuxième condensateur 50 constituent le deuxième intégrateur 57 dit d'évacuation de la figure 3, la fonction du commutateur 18 de la figure 3 étant assurée par la plaque de transfert 49. Sur la figure 8 est représenté le schéma électrique des éléments 40-50. La quantité de charges Qij évoquée en référence à la figure 1 est donc stockée dans le puits 48. On notera que les transistors 41, 46 se comportent comme des générateurs de courant pour le stockage des charges dans les condensateurs (45, 48) et (45,50).

On soulignera ici, et à nouveau, que la plaquette silicium comporte autant de circuits d'entrée, comme celui qui vient d'être décrit, qu'il y a de diodes de détection.

En aval du puits 48, sont disposées, au-dessus du substrat 40, des plaques-électrodes 60, espacées, et dont la mise sous tension est effectuée de manière décalée dans le temps, pour former la ligne à retard 12.

En réalité, la conversion en tension des quantités de charges est effectuée, non pas dans le convertisseur 19, mais directement au niveau d'un diode de sortie 61, en aval des plaques de retard 60, la diode 61 formant avec le substrat 40 une capacité de conversion Cij. La cathode de sortie de la diode 61, sous laquelle se trouve la quantité de charges Qij, se trouve donc à un potentiel

$$Vij = \frac{Qij}{Cij} \cdot$$

Toutes les cathodes de diodes de sortie associées respectivement aux photodiodes d'une même ligne sont reliées entre elles et à une source de tension $V_f$ par l'intermédiaire d'un transistor FET 62 destiné à fixer le potentiel des cathodes des diodes 61, si bien que le potentiel de la ligne 63 de connexion des cathodes des diodes 61 est égal à

$$V_f - \frac{\Sigma Qij}{\Sigma Cij} = V_i$$

C'est donc au niveau de la ligne 63 de connexion des cathodes des diodes 61 que s'effectue la sommation Qi des quantités de charges associées aux photodiodes d'une même ligne.

L'information de tension, sur la ligne 63, étant sous haute impédance, on rabaisse l'impédance par un étage d'adaptation à deux transistors FET 64, 65 en série, la tension $V_f$ étant appliquée à la source du transistor 64, la grille du transistor 64 étant reliée à la ligne 63, et le drain du transistor 65 étant mis à la terre.

Au-dessus du substrat silicium, sont disposées deux plaques métalliques , à deux niveaux différents, espacées l'une de l'autre par une couche d'isolant, comme la première plaque du substrat, pour former le condensateur de liaison 21 dont il a déjà été question. Ce condensateur 21 est relié au point de liaison des transistors d'adaptation 64, 65 et à un transistor FET 66 dit de référence. A la source du transistor 66 est appliquée la tension $V_{ref}$ qui est retransmise à une plaque 67 constituant la grille du transistor d'entrée 68 du multiplexeur, correspondant à la ligne de photodiodes considérée. Chaque transistor d'entrée 68 comporte une diode d'entrée 70, dont la cathode 71 est commandée en tension pour jouer le rôle de l'interrupteur 24 évoqué plus haut et assurer ainsi le multiplexage. Le transistor 66 assure la fonction de générateur de tension de référence 20, évoqué également ci-dessus, la commande de sa grille 72 jouant le rôle de l'interrupteur 22. C'est donc le capteur 23 de position du miroir de balayage qui commande la grille 72 du transistor 66 et la cathode 71 de la diode d'entrée 70 du multiplexeur. En aval de la grille 67 du transistor d'entrée 68 du multiplexeur, est disposée une plaque de stockage et de transfert 73 pour le multiplexage proprement dit des quantités de charges Qi potentialisées, sous laquelle s'étend un puits de stockage et de transfert 74. Entre les deux plaques de transfert voisines 73 de deux transistors d'entrée voisins 68 du multiplexeur, correspondant à deux lignes de photodiodes, sont disposées des électrodes d'isolation. Ainsi, les puits de stockage et de transfert 74, associés à toutes les lignes de photodiodes, respectivement, sont disposés les uns à la suite des autres. Ce n'est que par des phases d'horloge appliquées aux lignes 73, que les charges d'un puits 74 sont transférées dans le puits voisin, et ainsi de suite jusqu'au puits de sortie. La commande des cathodes 71 s'effectue pour d'abord saturer les transistors 68 avant de vider leur puits de stockage et de transfert 74 jusqu'au niveau correspondant à la tension Vi. Il s'agit de la technique bien connue du remplissage et vidage (spill and fill).

On notera qu'un gain peut être obtenu à l'entrée du multiplexeur, car, une tension étant égale à une quantité de charges divisée par une capacité, il suffit, la tension restant constante, d'augmenter la capacité, pour augmenter la quantité de charges.

Si on augmente les capacités associées à toutes les lignes de photodiodes dans le même rapport, la relativité des informations des lignes de photodiodes reste préservée, ce qui est l'essentiel.

Pour pouvoir négliger toute erreur de bruit spatial fixe due au multiplexeur, il faut que les signaux d'entrée du multiplexeur aient une dynamique beaucoup plus grande que la dispersion des tensions de seuil de ses transistors d'entrée.

**Revendications**

1. Caméra thermique à balayage parallèle, comprenant une plaquette (1) de détecteurs infrarouge (10) disposés en lignes et une plaquette (2) de traitement des signaux de détection comportant des moyens (11-13) pour intégrer les courants de sortie des détecteurs (10) et fournir des signaux de charges détectés correspondant à des quantités de charges de détection associées à chacune des lignes de détecteurs, caractérisée par le fait que les deux plaquettes sont superposées sous forme de composant hybride et que la plaquette de traitement (2) comporte des moyens (69,17) de contrôle de gain agissant sur l'amplitude des signaux de charges (s) détectés et traités et délivrés par la caméra et des moyens (14) de différenciation entre quantités de charges de détection et quantités de charges de référence associées à une scène de référence, comprenant des moyens (19) de conversion de charges de détection en tensions, réunis à un générateur de tension de référence (20) par une liaison capacitive (21) et des moyens (22,24) coopérant avec des moyens (23,54) pour montrer aux diodes de détection (10) un fond uniforme de référence à température déterminée pendant chaque retour de balayage, et fournir ainsi, pour chaque ligne de détecteurs, le niveau des quantités de charges de référence pour les signaux de charges détectés, les moyens de différenciation (14) étant agencés pour déterminer, pour chaque ligne de détecteurs, la différence entre les quantités de charges de détection et les quantités de charges associées à la scène de référence représentée par ledit fond, pour considérer le niveau des charges de référence de chaque ligne de détecteurs comme niveau de référence et s'affranchir ainsi du bruit spatial fixe dans le signal de sortie de la caméra représenté par cette différence de quantités de charge.

2. Caméra selon la revendication 1, dans laquelle les dits moyens de contrôle sont des moyens de contrôle automatique de gain agencés pour commander, en fonction de l'amplitude moyenne des signaux détectés et traités, les moyens (11) d'intégration des courants de sortie des détecteurs (10).

3. Caméra selon l'une des revendications 1 et 2, dans laquelle sont prévus, à la suite des moyens d'intégration (11), des moyens (12) de remise en phase des signaux délivrés par les détecteurs (10), intégrés et contrôlés, pour pallier la dispersion géométrique des détecteurs.

4. Caméra selon l'une des revendications 1 à 3, dans laquelle les moyens d'intégration (11) comportent un premier intégrateur de stockage (16) et un deuxième intégrateur d'évacuation (57) connectés alternativement à leur détecteur associé (10) par un commutateur (18), et sont commandés par les moyens de contrôle de gain (17,69) qui comportent une horloge (17) à rapport cyclique variable en fonction de l'amplitude des signaux de charges (s) détectés et traités et fournis par la caméra.

5. Caméra selon l'une des revendications 1 à 4, dans laquelle les informations délivrées par lesdits moyens de détermination de différence de charges (14) associés aux différentes lignes de détecteurs (10), respectivement, sont multiplexés dans un multiplexeur (15) relié à un dispositif de visualisation (6).

6. Caméra selon l'une des revendications 1 à 5, dans laquelle les moyens (11) d'intégration des courants de sortie des détecteurs (10) comportent des transistors à effet de champ (41) d'entrée de la plaquette de traitement (2), connectés directement à leurs détecteurs (10) respectifs.

7. Caméra selon la revendication 6, dans laquelle les transistors à effet de champ (41) d'entrée sont intégrés dans un substrat silicium (40), ils comportent, chacun, un puits de stockage (45) comme drain, et sont suivis, chacun, d'un espace (51) agencé pour être comblé en porteurs minoritaires sous l'action d'une plaque de transfert (49), et d'un second puits de stockage (48), le drain (45) des transistors d'entrée (41) constituant la source de transistors à effet de champ (46) d'évacuation.

8. Caméra selon la revendication 7, dans laquelle le potentiel de la plaque de transfert (49) est contrôlé par lesdits moyens de contrôle de gain (69-17).

9. Caméra selon l'une des revendications 7 et 8, dans laquelle les cathodes de diodes de sortie (61), dans le substrat silicium (40), sont reunies entre elles par une ligne (63) de conversion de charges en tensions.

10. Caméra selon l'une des revendications 7 à 9, dans laquelle le substrat silicium (40) comporte des transistors à effet de champ de multiplexage (68) aux grilles (67) desquels peut être appliquée une tension de référence.

11. Caméra selon la revendication 10, dans laquelle les transistors de multiplexage (68) comportent, chacun, une diode d'entrée (70) à la cathode de laquelle est appliquée une tension de multiplexage.

12. Caméra selon la revendication 11, dans laquelle la tension de la cathode (71) de diodes d'entrée (70) des transistors de multiplexage (68) et la tension de leur grille (67) sont commandées par un capteur de position d'un miroir de balayage (4).

**Claims**

1. Thermal parallel scan camera, including a chip (1) of infrared detectors (10) disposed in lines and a chip (2) for processing the detection signals having means (11-13) for integrating the output currents of the detectors (10) and for delivering detected signals corresponding to amounts of detection charges associated with each of the lines of detectors characterized in that the two chips are superposed in the form of hybrid component and that the processing chip (2) comprises means (69,17) for controlling the gain acting on the amplitude of the detected and processed charge signals and delivered by the camera and means (14) for differenciating between detection charge amounts and reference charge amounts associated with a reference scene, comprising means (19) for converting detection charges into voltages, connected to a reference voltage generator (20) by a capacitive connection (21) and means (22,24) operating with means (23,54) for showing to the detection diodes (10) a uniform reference background at a given temperature during each scan return, for thus determining, for each line of detectors, the level of the reference charge amounts for the detected charge signals, the differenciating means (14) being arranged for determining, for each line of detectors, the difference between the detection charge amounts and the charge amounts associated with the reference scene represented by said background, for considering the level of the reference charges of each line of detectors as reference level and, thus, for becoming independent from the steady spatial noise within the output signal of the camera represented by that difference in charge amounts.

2. Camera as claimed in claim 1, wherein said control means are automatic gain control means adapted for controlling, as a function of the mean amplitude of the detected and processed signals, the means (11) for integrating the output currents of the detectors (10).

3. Camera according to one of claims 1 and 2, wherein means (12), for rephasing the integrated and controlled signals delivered by the detectors (10), are provided after the integration means (11), for obviating the geometric dispersion of the detectors.

4. Camera according to one of claims 1 to 3, wherein the integration means (11) comprise a first storage integrator (16) and a second dump integrator (57) connected alternately to their associated detector (10) by a switch (18) and are controlled by the gain control means (17,69) which comprise a clock (17) with variable cyclic ratio as a function of the amplitude of the detected and processed signals delivered by the camera.

5. Camera as claimed in one of claims 1 to 4, wherein the information delivered by said means for determining the charge difference (14) associated with the different lines of detectors (10), respectively, are multiplexed in a multiplexer (15) connected to a display device (6).

6. Camera as claimed in one of claims 1 to 5, wherein the means (11) for integrating the output currents of the detectors (10) include input field effect transistors (41) of the processing chip (2), connected directly to their respective detectors (10).

7. Camera as claimed in claim 6, wherein the input field effect transistors (41) are integrated in a silicon substrate (40), they each include a storage well (45) as drain and are each followed by a space (51) arranged to be filled with minority carriers under the action of a transfer plate (49) and a second storage well (48), the drain (45) of the input transistors (41) forming the source of dump field effect transistors (46).

8. Camera as claimed in claim 7, wherein the potential of the transfer plate (49) is controlled by said gain control means (69-17).

9. Camera as claimed in one of claims 7 and 8, wherein the cathodes of output diodes (61) in the silicon substrate (40) are connected together by a charge to voltage conversion line (63).

10. Camera as claimed in one of claims 7 to 9, wherein the silicon substrate (40) includes multiplexing field effect transistors (68) to the grids (67) of which a reference voltage may be applied.

11. Camera as claimed in claim 10, wherein the multiplexing transistors (68) each include an input diode (70) to the cathode of which a multiplexing voltage is applied.

12. Camera as claimed in claim 11, wherein the voltage of the cathode (71) of the input diodes (70) of the multiplexing transistors (68) and the voltage of their grid (67) are controlled by a sensor sensing the position of a scanning mirror (4).

**Patentansprüche**

1. Wärmebildkamera mit Parallelabtastung, umfassend eine Platine (1) mit geradlinig angeordneten Infrarotdetektoren (10) und eine Platine (2) zur Verarbeitung der Detektorsignalen mit Vorrichtungen (11-13), um die Ausgangsströme der Detektoren (10) zu integrierem und erfaßte Ladungssignale zu liefern, welche Detektorladungsmengen entsprechen, die mit jeder der Detektorenreihen verbunden sind, dadurch gekennzeichnet, daß die beiden Platinen übereinander in Form eines Hybrid-Bauteils angeordnet sind und daß die Verarbeitungsplatine (2) Verstärkungskontrollvorrichtungen (69,17), die auf die Amplitude der von der Kamera erfaßten und verarbeiteten und gelieferten Ladungssignale (s) wirken, umfaßt und Vorrichtungen (14) zur Differenzierung zwischen Detektorladungsmengen und mit einem Referenzwert verbundenen Referenzladungsmengen, welche Vorrichtungen (19) zur Umwandlung von Detektorladungen in Spannungen enthalten, die über eine kapazitive Verbindung (21) mit einem Referenzspannungsgenerator (20) verbunden sind, und Vorrichtungen (22,24), welche mit Vorrichtungen (23,54) zusammenwirken, um an den Detektordioden (10) während jedes Abtastrücklaufs bei einer bestimmten Temperatur eine gleichförmige Referenzbasis aufzuweisen und somit für jede Detektorenreihe die Höhe der Referenzladungsmengen für die erfaßten Ladungssignale liefern, wobei die Differenzierungsvorrichtungen (14) dafür ausgelegt sind, daß sie für jede Detektorenreihe die Differenz zwischen den Detektorladungsmengen und den Ladungsmengen bestimmen, die mit dem durch die genannte Basis gebildeten Referenzwert verbunden sind, um die Höhe der Referenzladungen jeder Detektorenreihe als Referenzhöhe zu betrachten und sich so vom umveränderlichen Raumrauschen in dem durch diese Ladungsmengendifferenz dargestellten Ausgangssignal der Kamera zu befreien.

2. Kamera gemäß Anspruch 1, bei welcher die genannten Kontrollvorrichtungen Vorrichtungen zur automatische Verstärkungskontrolle sind, welche in Abhängigkeit von der mittleren Amplitude der erfaßten und verarbeiteten Signale die Vorrichtungen (11) zur Integration der Ausgangsströme der Detektoren (10) steuern.

3. Kamera gemäß einem der Ansprüche 1 und 2, bei welcher im Anschluß an die Integrationsvorrichtungen (11) Vorrichtungen (12) zur Phasenrücksetzung der von den Detektoren (10) gelieferten, integrierten und kontrollierten Signale vorgesehen sind, um die geometrische Streuung der Detektoren zu beseitigen.

4. Kamera gemäß einem der Ansprüche 1 bis 3, bei welcher die Integrationsvorrichtungen (11) einen ersten Lagerungsintegrator (16) und einen zweiten Ausgabeintegrator (57) umfassen, welche alternativ von einem Schalter (18) an ihren angeschlossenen Detektor (10) angeschlossen werden und von den Verstärkungstkontrollvorrichtungen (17,69) gesteuert werden, welche einen Zeitgeber (17) mit in Abhängigkeit von der Amplitude der von der Kamera erfaßten und verarbeiteten und gelieferten Ladungssignale (s) variablem zyklischem Verhältnis beinhalten.

5. Kamera gemäß einem der Ansprüch 1 bis 4, bei welcher die von den genannten bzw. mit den verschiedenen Detektorenreihen (10) verbundenen Vorrichtungen zur Bestimmung der Ladungsdifferenzen (14) gelieferten Informationen in einem mit einem Anzeigegerät (6) verbundenen Multiplexer (15) gebündelt werden.

6. Kamera gemäß einem der Ansprüche 1 bis 5, bei welcher die Vorrichtungen (11) zur Integration der Ausgangsströme der Detektoren (10) Eingangstransistoren mit Feldeffekt (41) der Verarbeitungsplatine (2) enthalten, welche direkt an ihren jeweiligen Detektor (10) angeschlossen sind.

7. Kamera gemäß Anspruch 6, bei welcher die Eingangs-Transistoren mit Feldeffekt (41) in ein Siliziumsubstrat (40) integriert sind, jeder von ihnen einen Lagerungssraum (45) als Drain umfaßt und an jeden von ihnen ein Raum (51) anschließt, welcher mit Hilfe einer Transferplatte (49) mit Minoritätsträgern gefüllt werden kann, und ein zweiter Lagerungsraum (48), wobei der Drain (45) der Eingangstransistoren (41) die Source für Ausgabetransistoren mit Feldeffekt (46) bildet.

8. Kamera gemäß Anspruch 7, bei welcher das Potential der Transferplatte (49) von den genannten Verstärkungskontrollvorrichtungen (69-17) kontrolliert wird.

9. Kamera gemäß einem der Ansprüche 7 und 8, bei welcher die Kathoden von Ausgangsdioden (61) im Siliziumsubstrat (40) untereinander durch eine Leitung (63) zur Umwandlung von Ladungen in Spannungen verbunden sind.

10. Kamera gemäß einem der Ansprüche 7 bis 9, bei welcher das Siliziumsubstrat (40) Multiplex-Transistoren mit Feldeffekt (68) enthält, an deren Gates (67) eine Referenzspannung gelegt werden kann.

11. Kamera gemäß Anspruch 10, bei welcher jeder Multiplextransistor (68) eine Eingangsdiode (70) enthält, an deren Kathode eine Multiplexspannung gelegt wird.

12. Kamera gemäß Anspruch 11, bei welcher die Spannung der Kathode (71) von Eingangsdioden (70) der Multiplextransistoren (68) und die Spannung ihres Gates (67) von einem Positionsgeber eines Abtastspiegels (4) gesteuert werden.

FIG. 1

FIG. 2

FIG. 3

FIG.4

FIG.5

FIG.6

FIG.7

11

FIG . 8

FIG. 9